(19) Europäisches Patentamt / European Patent Office / Office européen des brevets

(11) **EP 3 558 023 B1**

(12) **EUROPEAN PATENT SPECIFICATION**

(45) Date of publication and mention
of the grant of the patent:
**06.03.2024   Bulletin 2024/10**

(21) Application number: **17825510.5**

(22) Date of filing: **20.12.2017**

(51) International Patent Classification (IPC):
*A23G 9/04* *(2006.01)*     *A23L 7/117* *(2016.01)*
*A23L 7/161* *(2016.01)*    *A23L 19/18* *(2016.01)*
*A23G 9/28* *(2006.01)*     *A23G 9/22* *(2006.01)*
*A23G 9/16* *(2006.01)*     *A23G 9/12* *(2006.01)*

(52) Cooperative Patent Classification (CPC):
**A23L 7/161; A23G 9/166; A23G 9/22; A23G 9/224;
A23G 9/28; A23G 9/281; A23G 9/282; A23G 9/283;
A23G 9/287; A23L 7/117; A23L 19/18**

(86) International application number:
**PCT/EP2017/083902**

(87) International publication number:
**WO 2018/115172 (28.06.2018 Gazette 2018/26)**

(54) **VARIEGATOR**

VARIEGATOR

DISPOSITIF DE PANACHAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **21.12.2016  EP 16205925**

(43) Date of publication of application:
**30.10.2019   Bulletin 2019/44**

(73) Proprietor: **Unilever IP Holdings B.V.
3013 AL Rotterdam (NL)**

(72) Inventors:
 • **BURGESS, Geoffrey, Alec
  Sharnbrook
  Bedfordshire MK44 1LQ (GB)**

 • **ROMANO, Gianfelice
  Sharnbrook
  Bedfordshire MK44 1LQ (GB)**
 • **TETRADIS-MAIRIS, Georgios
  Sharnbrook
  Bedfordshire MK44 1LQ (GB)**
 • **FERRANTE, Giuseppe
  Sharnbrook
  Bedfordshire MK44 1LQ (GB)**

(74) Representative: **Warner, Guy Jonathan
Unilever Patent Group
Bronland 14
6708 WH Wageningen (NL)**

(56) References cited:
 **GB-A- 1 386 955     US-A- 2 669 946
 US-A- 2 774 314     US-A1- 2003 068 409**

EP 3 558 023 B1

**Description**

**Background of the Invention**

Ice cream and other frozen desserts are among the most appreciated of treats. Although well-liked even without added components, the presence of inclusions such as sauces and chunks serves further to enhance the eating experience.

While consumers enjoy the presence of sauces and chunks in frozen desserts, individuals responsible for manufacturing the foods may feel some ambivalence given the challenges attendant to processing them. In particular, desirable chunk distribution and sauce swirl patterns may be difficult to achieve. This is a problem since it is believed desirable for consumers to experience the taste combination of ice cream, chunks and sauce in every spoonful of the product. Also, it is desirable to clean the equipment easily and quickly. Cleaning which takes too much time is an undesirable constraint on factory capacity.

Apparatuses called variegators are used to distribute sauces within a frozen dessert. There is a need for a variegator which promotes consistent distributions but which also permits quick cleaning.

CA687293 discloses a variegator having an opening for introduction of variegate below openings for introduction of ice cream. A rotor rotates to combine the variegate and the ice cream.

US3408960 discloses a variegator including a rotating spinner. For manufacturing a variegated frozen comestible, such as rippled ice cream, a suitable contrasting flavoring syrup is introduced into a T lateral for ultimate patterned introduction into the semi-frozen comestible, such as ice cream. The ice cream is introduced into a second T-fitting by means of a supply pipe carried by a lateral extension.

Moser US2774314 discloses a variegator and mentions that it has been proposed to interpose obstructing means in the path of a flowing matrix containing sauce streams so as to create turbulence which distributes the sauce. Distribution of sauces including solid particles such as fruits and nuts is mentioned.

Binley et al. US 2003/0068409 discloses a nozzle which may include a static mixer.

The Binley et al. apparatus prepares frozen ice confections incorporating inclusions in such a way the flows comprising inclusions may be introduced discontinuously at a multiple positions. Binley et al.'s invention is said to be particularly applicable to preparation of frozen ice confections incorporating soft fruit pieces.

Peyton US Patent No. 2,669,946 discloses an apparatus employing dispersing discs for making variegated ice creams.

Watts GB 1,386,955 discloses a tube for promoting turbulence The tube may include turbulence promoting elements comprising helices.

Other devices are disclosed in Moser CA570098, Moser US 2979996, Dutchess US 3014437, GB 897820 (Plus Sales), Bell et al. US 3477393, and Bell et al. CA883029.

**Summary of the Invention**

The present invention is directed to a variegator and to a process for using it, as defined in the appended claims. The variegator of the invention permits the manufacturer to obtain desirable patterns of distribution of sauce and chunks while at the same time permitting fast cleaning-in-place times to minimize factory downtime.

The variegator of the invention comprises a) one or more conduits, each suitable for feeding one or more base frozen confections to a first set of one or more openings into a chamber, b) one or more conduits suitable for feeding one or more non-solid fluid variegating materials such as a sauce or sauces through a second set of one or more openings into the chamber, the second set of one or more openings being at points below the base frozen confection opening(s), and c) a static mixer below the one or more variegating material openings, said static mixer comprising at least two baffles in series, the axis of the conduit through which the variegating material is fed through the one or more second openings into the chambers is disposed perpendicularly at the point of entry to the chamber(s) to the axis of at least one of the one or more conduits through which the base frozen confection is fed to the base frozen confection opening into the chambers at the point of entry to the chamber(s), wherein the first of the at least two static mixer baffles begin at from 0 to 12 mm of the bottom of the variegating material opening or openings and the baffles of the static mixer are helical.

The first baffle of the static mixer is present directly below the opening of the variegating material into the chambers. In particular, the first baffle begins at from 0 to 12 mm from the bottom of the variegating material opening, preferably from 0.5 to 8mm, especially 4-5 mm, or 0.5 to 5 mm.

The variegator of the invention may include at least two conduits each suitable for feeding a base frozen confection to an opening in the chamber, the conduits each comprising at least one section feeding into an opening disposed along the same axis and being opposed to each other. The conduits may feed directly into the opening.

Advantageously, the axis of the conduit suitable for feeding the one or more variegating materials through the one or more second openings into the chamber is disposed perpendicularly to at least one of the one or more conduits suitable for feeding the one or more base frozen confections to the opening into the chamber. Preferably, the axes of all variegating material conduits at the points they enter the chambers to combine with the one or more base frozen confections are perpendicular to the axes of all frozen confection conduits, at the points they enter the chamber(s).

The baffles of the static mixer are helical.

Preferably, the static mixer has two vertically extending sides and there are at least two conduits suitable for feeding the one or more fluid variegating materials through at least two second openings into the chamber at points below the base frozen confection opening(s). The static mixer first section is on a first side of the static mixer and is situated to receive the variegating material from the first variegating material conduit, and a second static mixer section on a second side of the static mixer receives the variegating material from the second conduit.

The fluid variegating material may be a single fluid material such as a sauce, a mix of fluid materials (e.g., sauces or different sauces), each introduced into one or two or more openings into the chambers at points below the ice cream (or other frozen confection) opening(s). That is, the variegating material introduced into one opening into the chamber can be the same or different from the variegating material introduced through another opening or openings.

The invention is also directed to a process for preparing a frozen confection using the variegator of the invention, said process comprising:

feeding one or more base frozen confections through one or more conduits of the variegator according to the invention, to a first opening or set of openings into a chamber, feeding one or more fluid variegating materials through one or more conduits through a second opening or set of openings into the chamber at points below all base frozen confection opening(s), and feeding the combined frozen base confection and fluid variegating material into a static mixer below the variegating material opening(s), the static mixer comprising at least two baffles in series, the axis of the conduit through which the variegating material is fed through the one or more second openings into the chambers is disposed perpendicularly at the point of entry to the chamber(s) to the axis of at least one of the one or more conduits through which the base frozen confection is fed to the base frozen confection opening into the chambers at the point of entry to the chamber(s), wherein a first of the at least two static mixer baffles begins at from 0 to 12 mm of the bottom of all of the variegating material opening or openings, the baffles of the static mixer are helical, and particulate inclusions are included in the base frozen confection as it is fed into the variegator and wherein the particulate inclusions are chunks having an average length of from 0.5 mm to 30 mm and an average volume of from 0.125 to 27000 mm$^3$, and the one or more fluid variegating materials are non-solids.

In the process of the invention, the first baffle of the static mixer is in close proximity to the bottom of the opening(s) of the variegating one or more variegating materials into the chamber. As indicated above, the first of the at least two static mixer baffles begins at from 0 to 12 mm from the bottom of the variegating material opening, preferably from 0.5 to 8mm, especially 4-5 mm, or 0.5 to 5 mm.

The process of the invention preferably comprises feeding the one or more base frozen confections through at least two conduits, each to an opening in the chamber, the conduits comprising at least one section disposed along the same axis and opposed to each other and feeding directly into the openings.

Preferably, the axis of the conduit through which the variegating material is fed through the one or more second openings into the chambers is disposed perpendicularly at the point of entry to the chamber(s) to the axis of at least one of the one or more conduits through which the base frozen confection is fed to the base frozen confection opening into the chambers at the point of entry to the chamber(s). More preferably, the axes of all variegating material conduits at the points they enter the chambers to combine with the one or more base frozen confections are perpendicular to the axes of all frozen confection conduits at the points they enter the chambers.

The baffles of the static mixer are helical.

The process preferably includes feeding the one or more fluid variegating material through the second set of openings into the chamber through at least two conduits to the static mixer wherein the static mixer comprises a first section on a first side of the static mixer for receiving the one or more variegating material from one of the variegating material conduits and a second section on a second side of the static mixer for receiving the same or different one or more variegating material from the second of the variegating material conduits.

In accordance with the process of the invention, particulate inclusions are contained in the base frozen confection as it is fed into the variegator. The particulate inclusions are chunks having an average length of from 0.5 to 30 mm and and an average volume of from 0.125 to 27000 mm3. Exemplary lengths for runs of several products are as follows:

|  | mm | mm | mm | mm^3 |
|---|---|---|---|---|
| Chunk Size min (mincup) | 0.5 | 0.5 | 0.5 | 0.125 |
| Chunk Size max (mincup) | 20 | 20 | 20 | 8000 |
| Chunk Size min (pint) | 0.5 | 0.5 | 0.5 | 0.125 |

(continued)

|  | mm | mm | mm | mm^3 |
|---|---|---|---|---|
| Chunk Size max (pint) | 30 | 30 | 30 | 27000 |

Particulate inclusions may be included in the base frozen confection at alevel of up to 60% especially 10% to 50% with the weight percent of particulate inclusions based on the weight of the frozen confection (including inclusions as introduced into the variegator, but excluding the variegating material). Example of particulate inclusions comprise chunks of chocolate, cookie dough, cookie, etc. More broadly, inclusions present in the frozen confection when introduced into the variegator may include oil based chunks/inclusions, thick pastes, baked inclusions and nuts.

By base frozen confection herein is meant the frozen confection minus the fluid variegating material such as sauce. Since particulate inclusions will be fed as part of the base frozen confection, base frozen confection may include any particulate inclusions.

For a more complete understanding of the above and other features and advantages of the invention, reference should be made to the following description of the preferred embodiment.

## Brief Description of the Drawings

Fig. 1 is a perspective view from the front and above of the variegator of the invention.
Fig. 2 is a cross section along the lines II-II of Fig. 1 viewed from the rear of Fig. 1.
Fig. 3 is a cross section along the lines III-III of Fig. 1 viewed from the right side of Fig. 1.
Fig. 4 comprises photographs of products produced using the variegator of the invention.

## Detailed Description of the Invention

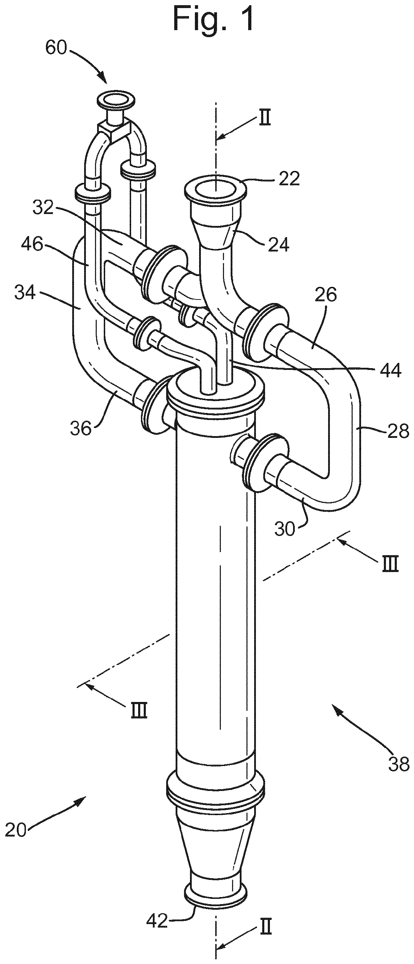

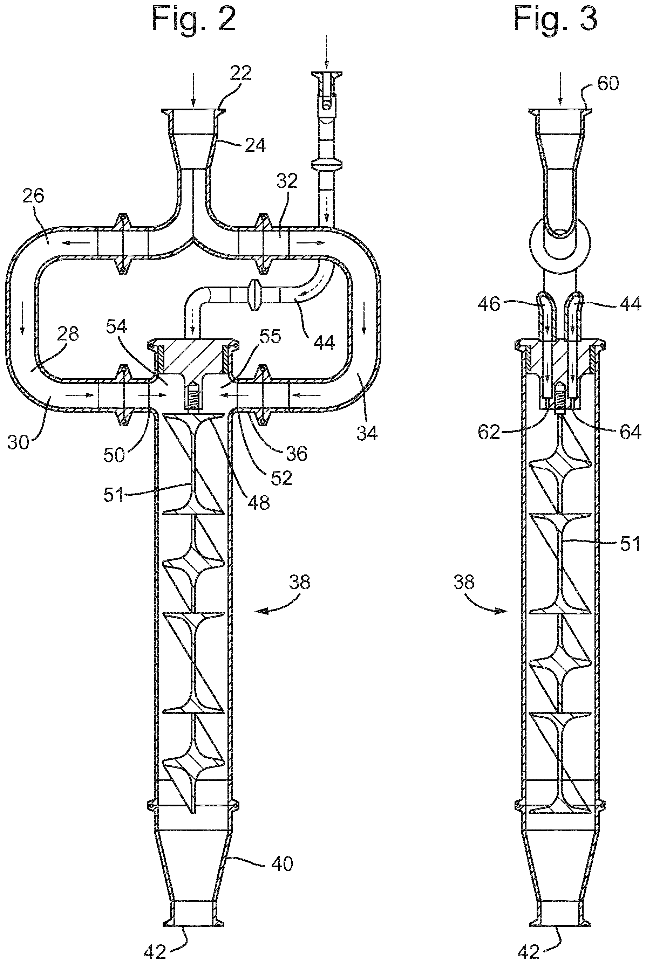

Variegator 20 (Fig. 1) comprises base frozen confection feeding opening 22 and downwardly extending common conduit 24. Base frozen confection may be fed into opening 22 from a freezer. Conduit 24 divides into two horizontally extending frozen confection conduits 26 and 32. Conduit 26 leads to downwardly extending conduit 28 whereas conduit 32 leads to downwardly extending conduit 34. After travelling through conduits 28, 34, base frozen confection enters horizontally extending conduits 30, 36 which are oriented along the same horizontal axis and are opposed, i.e., they lead toward each other. Conduits 30, 36 lead to openings 50, 52 (Fig. 2) into chambers 54, 55 (Fig. 2).

Although illustrated in Figs. 1 and 2 as having a single base frozen confection opening 22, more than one opening could be provided, particularly if it desired to introduce different base frozen confections into chambers such as 54, 55.

Opening 60 (Fig. 1) receives sauce or other fluid (sauce can be in temperature range of -10oC to 40oC, preferably -5 to 20oC) variegating materials and divides into two conduits 46, 44. Conduits 46, 44 lead to openings 62, 64 (Fig. 3) into chambers 54 and 55, respectively (Fig. 2). Variegating material openings 62, 64 (Figs. 3, 6) are below base frozen confection openings 50, 52.

Although illustrated in Figs. 1 and 3 as having a single fluid variegating material opening 60, more than one opening could be provided, particularly if it desired to introduce different fluid variegating materials into chambers such as 54, 55.

Chambers 54, 55 lead into static mixer 38. A short distance below openings 62, 64 is first static mixer baffle 48. Static mixer 38 includes a series of helical baffles starting with baffle 48. Effectively the baffles divide the first and second sides of the static mixer into separate sections. Base frozen confection and variegating material are mixed in each of the first and second sides of the static mixer as they descend through the mixer and encounter the static baffles. Using the separate sections the static mixer divides and recombines the mix and gives a "rainbow" effect.

After passing through all of the baffles, the mixed frozen confection encounters tapered funnel section 40 and variegator exit opening 42.

In operation, base frozen confection, such as ice cream, emerging from a freezer is fed into opening 22 and then common conduit 24. One or more pumps or freezers or Scape Heat Exchangers may be used to urge the base frozen confection and variegating material through variegator 20. The base frozen confection then traverses horizontal conduits 26, 32, travels downwardly though conduits 28, 34 and horizontally back toward the center of the variegator via opposed collinear conduits 30, 36. The base frozen confection (or confections) travel(s) through openings 50, 52 into chambers 54, 55.

Variegating material, which will typically be a sauce, is at the same time fed into opening 60, through conduits 46, 44, and through openings 62, 64, which are below frozen confection openings 50, 52, and into chambers 54, 55 and perpendicular to the directions from which base frozen confection enters the chambers through conduits 30, 36.

It has been found that good results are obtained if the base frozen confection and variegating material such as sauce are pumped such that after entering chambers 54, 55 they move downward at the same speed. That is, preferably the base frozen confection does not drive the flow of sauce or other variegating material.

Shortly thereafter, the base frozen confection and variegating material encounter a series of helical baffles of static mixer 38. Preferably, each helical buffle is 90deg offset from the next one. The helical baffles effectively divide the mixer into two sides. Static mixers are motionless mixers which derive the fluid motion or energy dissipation needed for mixing from the flowing fluid itself. They comprise repeated structures referred to as mixing elements or baffles attached inside a pipe. The mixing elements divide and recombine fluids which pass there through.

The variegator may include various types of dosing dispensing devices.

The base frozen confection (prior to combining with the fluid variegating material) is preferably aerated, i.e., it has an overrun of more than 20 percent, preferably more than 30 percent, more preferably more than 50 percent. Preferably, the base frozen confection has an overrun of less than 200 percent, more preferably less than 150 percent, most preferably less than 120 percent. Overrun is defined by the equation below and is measured at atmospheric pressure:

$$\text{Overrun \%} =$$

$$((\text{density of mix} - \text{density of frozen confection})/\text{density of frozen confection}) \times 100$$

The base frozen confection is a frozen product, such as ice cream, sherbet, water ice, milk ice, frozen yoghurt and the like. Non dairy "ice creams" such as those using vegetable fat instead of milk fat may be used. "Frozen," as used herein, denotes that the product is solidified under freezing conditions to a hardpack or pumpable consistency. The ice content of the frozen confection should be more than 15% but less than 45%. The frozen confection flavored with the sauce or other fluid variegating material may be combined with other ingredients such as wafers in an ice cream sandwich.

The frozen confection is preferably a water-continuous emulsion. More than one base frozen confection may be used, if desired. For instance, two different base frozen confections can be mixed together before introduction into the variegator, or different base frozen confections can be introduced through each opening.

The sauce or other fluid variegating materials are non-solids. They are preferably soft enough at their processing temperatures (-10°C to 40°C, preferably -5 to 20°C) generally semi-solid or liquid, to be pumped (from Freezer or scrape heat exchanger) to the static mixer and, after mixing in the static mixer, form a frozen confection which is non-homogeneous to taste and to the eye e.g., present as a ripple. One of ordinary skill can ascertain whether the flavorant/ingredient is sufficiently non-solid. Examples of fluid variegating agents include nut pastes such as peanut butter, almond butter, fudge, other chocolate sauce, caramel etc. The one or more fluid variegating materials can even be a frozen confection such as ice cream so long as it is sufficiently fluid to travel through the fluid variegating material orifice leading into the variegator.

The sauce or other fluid variegating materials are preferably present in the base frozen confection at levels of from 2.5 to 50 wt. %, especially from 5 -30 wt. %, the wt% calculation excluding the weight of any solid inclusions such as chunks. The base frozen confection, excluding any solid inclusions, is preferably present at from 97.5 to 70 wt. %, especially from 80 to 96 wt. %.

Generally, the product will include a dairy source, such as whole milk, skim milk, condensed milk, evaporated milk, cream, butter, butterfat, whey, milk solids non-fat, etc. The dairy source will generally contribute dairy fat and/or non-fat milk solids such as lactose and milk proteins, e.g. whey proteins and caseins. A dairy protein powder, such as whey protein, may be used as a protein source. Lactose will generally be present in the base frozen confections used in the invention within the range of from 0 to 8 wt. %, especially from 0.5 to 7%, more preferably from 3 to 8 wt. % (i.e., excluding the fluid variegating material) and excluding solid inclusions-that is, the ice cream or the like to which the sauce or other fluid flavoring is added minus any solid inclusions). Dairy proteins will generally be present in the base frozen confections at from 1 to 5 wt. %, especially from 1 to 3 wt. % (i.e., excluding sauce or other fluid variegating material) and excluding solid inclusions). Other proteins may be present at from 0 to 3 wt. %.

While butter fat from cream and other dairy sources is preferred in the base frozen confection, alternative fat sources, such as vegetable fat, may be used. For example, fats may be taken from the group which includes cocoa butter, illipe, shea, palm, palm kernal, sal, soybean, cottonseed, coconut, rapeseed, canola, and sunflower oils and mixture thereof.

The level of triglyceride fat in the base frozen confection product, (i.e., excluding sauce or other fluid variegating material) and excluding solid inclusions), indeed preferably the total level of digestible lipid in the base frozen confection product, is preferably from 2 wt. % to 20 wt. %, more preferably, from 3 wt. % to 15 wt. %.

If desired, the product may include an emulsifying agent. Typical emulsifying agents may be phospholipids and

EP 3 558 023 B1

proteins, such as dairy or soy proteins, or esters of long chain fatty acids and a polyhydric alcohol. Fatty acid esters of glycerol, polyglycerol esters of fatty acids, sorbitan esters of fatty acids and polyoxyethylene and polyoxypropylene esters of fatty acids may be used but organoleptic properties, or course, must be considered. Mono- and diglycerides may also be used but may also be omitted. Indeed, emulsifiers other than proteins and phospholipids may be omitted. If present, non-protein emulsifiers are used in amounts of about 0.03 percent to 0.5 percent, preferably 0.1 percent to 0.3 percent by weight of the base frozen confection, (i.e. excluding the sauce or other fluid variegating agent) and excluding any solid inclusions.

Gum stabilizers are particularly effective in controlling viscosity, providing mouth feel and improving whipping (aerating) properties; to provide a protective colloid to stabilize proteins to heat processing; to modify the surface chemistry of fat surfaces to minimize creaming; to provide acid stability to protein systems and; to increase freeze-thaw stability. Gums can be classified as neutral and acidic, straight- and branched-chain, gelling and nongelling. The principal gums that may be used are Karaya gums, locust bean gum, carageenan, xanthan, guar, alginate and carboxymethyl cellulose.

Gums are generally used in concentrations of 0.02-0.5 wt. % of the base frozen confection composition (i.e. excluding the sauce or other fluid variegating agent) and excluding any solid inclusions. Because of differing functionalities, combinations of certain gums may provide a better product than a single gum. For instance, for some types of frozen confections karaya gum is ideally used together with polydextrose.

The stabilizer may be microcrystalline cellulose as described in U.S. Pat. No. 5,209,942, e.g., Avicel 581, which is activated or "peptized." A combination of microcrystalline cellulose and sodium carboxymethyl cellulose (CMC) may give good results.

Microcrystalline cellulose has been listed in the Fourth Supplement to the Food Chemicals Codex, First Edition, by the National Academy of Sciences-National research Council as: Cellulose, Microcrystalline (cellulose gel). Cellulose gel in combination with cellulose gum is especially preferred.

Another component may comprise one or any combination of carboxymethylcellulose (in addition to that with which the microcrystalline cellulose may be coated), xanthan gum, starch and alginate.

If desired, gelatin, e.g., 225 bloom, may be included in the base frozen confection compositions at levels of say 0.1-1 wt. %, especially from 0.1-0.3 wt. % (i.e. excluding the sauce or other fluid variegating agent) and excluding any solid inclusions. Certain salts such as phosphates and chlorides may be employed to alter the buffering capacity of the system and to improve the water binding capacity of proteins and improve solubility and flavor. Sodium chloride and sodium monophosphate at very low levels are preferred but calcium phosphate and particularly monocalcium phosphate may also be employed. Sodium chloride is preferred at levels of 0.05 percent to 0.3 percent of the base frozen confection; and sodium monophosphate is preferred at levels of 0.01 percent to 0.1 percent of the base frozen confection (i.e. excluding the sauce or other fluid variegating agent) and excluding any solid inclusions

Generally, the compositions will be naturally sweetened. Natural sources of sweetness include sucrose (liquid or solids), glucose, fructose, and corn syrup (liquid or solids). Other sweeteners include lactose, maltose, and galactose. Levels of sugars and sugar sources preferably result in sugar solids levels of up to 28 wt. % in the base frozen confection, preferably from 5 to 24 wt. %, especially from 10 to 24 wt. %.

If it is desired to use artificial sweeteners, any of the artificial sweeteners well known in the art may be used, such as aspartame, saccharine, Alitame (obtainable from Pfizer), acesulfame K (obtainable from Hoechst), cyclamates, neotame, sucralose and the like, and mixtures thereof. The sweeteners are used in varying amounts of about 0.005 percent to 1 percent of the base frozen confection, preferably 0.007 percent to 0.73 percent depending on the sweetener, for example. Aspartame may be used at a level of 0.01 percent to 0.15 percent of the base frozen confection, preferably at a level of 0.01 percent to 0.05 percent. Acesulfame K is preferred at a level of 0.01 percent to 0.15 percent of the base frozen confection. Above artificial sweetners are percentages of the base frozen confection (i.e. excluding the sauce or other fluid variegating agent) and also excluding any solid inclusions.

Natural low- or non-caloric sweeteners such as stevia may be used at levels of from 0.01 to 0.15, especially 0.01 to 0.05 of the base frozen confection (i.e. excluding the sauce or other fluid variegating agent) and excluding any solid inclusions.

If desired, the product may include polydextrose. Polydextrose functions both as a bulking agent and as a fiber source and is preferably included at from 1 to 10 wt. %, especially from 3 to 6 wt. % of the base frozen confection (i.e. excluding the sauce or other fluid variegating agent) and excluding any solid inclusions.

Polydextrose may be obtained under the brand name Litesse from Danisco Sweeteners. Among other fiber sources which may be included in the compositions are fructose oligosaccharides such as inulin. Additional bulking agents which may be used include maltodextrin, sugar alcohols, corn syrup solids, sugars or starches. Total bulking agent levels in the base frozen confections may be from about 5 percent to 20 percent, preferably 13 percent to 16 percent (i.e. excluding the sauce or other fluid variegating agent) and excluding any solid inclusions.

If desired, sugar alcohols such as glycerol, sorbitol, lactitol, maltitol, mannitol, etc. may be used to control ice formation. If present, sugar alcohols may be used in an amount of about 1 percent to 8 percent, preferably 2.5 percent to 8.0 percent of the base frozen confection (i.e. excluding the sauce or other fluid variegating agent) and excluding any solid inclusions. However, glycerol may be excluded.

In addition to the sauce or other fluid variegating materials, other flavorings are preferably added to the product but preferably in amounts that will impart a mild, pleasant flavor. The flavoring may be any of the commercial flavors employed in ice cream, such as varying types of cocoa, pure vanilla or artificial flavor, such as vanillin, ethyl vanillin, chocolate, extracts, spices and the like. It will further be appreciated that many flavor variations may be obtained by combinations of the basic flavors. The confection compositions are flavored to taste as mentioned above. Suitable flavorants may also include seasoning, such as salt, and imitation fruit or chocolate flavors either singly or in any suitable combination.

Malt powder can be used, e.g., to impart flavor, preferably at levels of from 0.01 to 3.0 wt. % of the base frozen confection, especially from 0.05 to 1 percent (i.e. excluding the sauce or other fluid variegating agent) and excluding any solid inclusions.

Preservatives such as potassium sorbate may be used as desired.

Adjuncts such as wafers and coatings may be included as desired. In the case of, coatings, they are typically present at from 5 to 30 wt. % of the base frozen confection (including the weight of the coating but excluding the weight of the sauce or other fluid variegating agent and excluding the weight of any solid inclusions.)

Water/moisture/ice will generally constitute the balance of the base frozen confection at, e.g., from 40-90 wt. %, especially from 50-75 wt. % (i.e. excluding the sauce or other fluid variegating agent) and excluding any solid inclusions.

Apart from the use of the variegator, processes used for manufacture of the products are similar to those used for conventional frozen confections. Typical process steps include: ingredient blending, pumping, pasteurization, homogenization, cooking, aeration, freezing and packaging. In accordance with the invention, after freezing and before packaging, the frozen confection is combined with the fluid variegating material in, and just before, the static mixer to form the frozen confection of the invention.

Products can be manufactured by batch or by continuous processes, preferably continuous. Ingredients may be either liquid or dry, or a combination of both. Liquid ingredients can be blended by the use of positive metering pumps to a mixing tank or by in-line blending. Dry ingredients must be hydrated during the blending operations. This is most commonly accomplished by the use of turbine mixers in processing vats or by incorporating the dry material through a high speed, centrifugal pump. The blending temperature depends upon the nature of the ingredients, but it must be above the melting point of any fat and sufficient to fully hydrate any gums used as stabilizers and any proteins.

Pasteurization is generally carried out in high temperature short time (HTST) units, in which the homogenizer is integrated into the pasteurization system. Protein and any microcrystalline cellulose are advisedly fully hydrated before adding other components which might interfere with the hydration.

Use of the variegator and process of the invention results in consistent patterns of distribution of sauce and chunks in frozen confections such as ice cream while at the same time permitting fast cleaning-in-place times to minimize factory downtime.

### Example

A Ben & Jerry's brand premium ice cream with chocolate cookie pieces and dark caramel swirl [TG1]is processed using the equipment and process described above and shown in Figs. 1-3. The chocolate cookie pieces are included in the base ice cream using an inline dispenser device after the freezer and fed into the base frozen confection opening of the variegator, and the caramel swirl is introduced as the fluid variegating material.

After being fed through the variegator, the ice cream is packed and the variegator is then cleaned in place. Six trials are done and the tests shown in Table 1 are performed to measure the success of the cleaning. The quality of ice cream produced in six trials is measured and the results are provided in Table 2. The cleaning in place procedure is set forth in Table 3.

Table 1

| CHECK | RESULT | | | | | |
|---|---|---|---|---|---|---|
| | A | B | C | D | E | F |
| **VISUAL INSPECTION (PASS-FAIL)** | | | | | | |
| Contamination will not be visible with the surface wet or dry | PASS | PASS | PASS | PASS | PASS | PASS |
| The surface will not give a greasy feeling to clean fingers when they are rubbed onto the surface | PASS | PASS | PASS | PASS | PASS | PASS |
| No objectionable odour will be apparent | PASS | PASS | PASS | PASS | PASS | PASS |
| A new, white facial tissue wiped several times over the surface will show no discoloration | PASS | PASS | PASS | PASS | PASS | PASS |

| | | | | | | |
|---|---|---|---|---|---|---|
| The surface is completely wetted when water is draining from it | PASS | PASS | PASS | PASS | PASS | PASS |
| **ATP MEASUREMENTS (PASS if less of 30)** | 0 | 0 | 0 | 19 | 0 | 1 |
| **RESIDUAL PROTEIN DETECTION (PASS-FAIL)** | PASS | PASS | PASS | PASS | PASS | PASS |

As can be seen in Table 1, all tests are passed after cleaning in place.

Table 2

Knife Value

| | QUALITY CHECK RESULTS | | | | | |
| | Trial A | | | Trial B | | |
| **Colour [PASS/OKAY/FAIL]** | SET 1 | SET 2 | SET 3 | SET 1 | SET 2 | SET 3 |
| Ice cream is off white | **PASS** | **PASS** | **PASS** | **PASS** | **PASS** | **PASS** |
| Chocolate covered waffle cone pieces are dark brown | **PASS** | **PASS** | **PASS** | **PASS** | **PASS** | **PASS** |
| Caramel variegate is light brown to medium brown with an approximate ¼" vein throughout the pint | **PASS** | **PASS** | **PASS** | **PASS** | **PASS** | **PASS** |
| **Texture [PASS/OKAY/FAIL]** | | | | | | |
| Ice cream is smooth and creamy | **PASS** | **PASS** | **PASS** | **PASS** | **PASS** | **PASS** |
| Crisp Waffle Cone pieces | **PASS** | **PASS** | **PASS** | **PASS** | **PASS** | **PASS** |
| Smooth caramel variegate | **PASS** | **PASS** | **PASS** | **PASS** | **PASS** | **PASS** |

As seen in Table 2, all quality criteria are passed using the variegator and process of the invention.

Table 3

| Timeline | WORKFLOW | Process Parameters | Involved |
|---|---|---|---|
| 35 min | CIP | 5 min cold water<br>10 min pre-rinse @ 75<br>10 min deterg.circ. @20<br>10 min cold water | Whole system:<br>Freezer, pipes,<br>variegator, valve |
| 60 min | WARM UP and TRIAL | IC:298 l/h 40%OR -4.5deg<br>Sauce: 0.4 kg/min 4deg<br>IC 82% - sauce11%- Inclusions 7% | B&J Vanilla IC<br>Dark Caramel Sauce<br>Choco Cookie |
| 35 min | CIP | 5 min cold water<br>10 min pre-rinse @ 75<br>10 min deterg.circ. @20<br>10 min cold water | Whole system |
| 15 min | DRYING | Ambient<br>Conditions | Whole system |
| 15 min | CIP VALIDATION | Visual Inspection<br>Residual Protein Detection<br>ATP | Variegator |

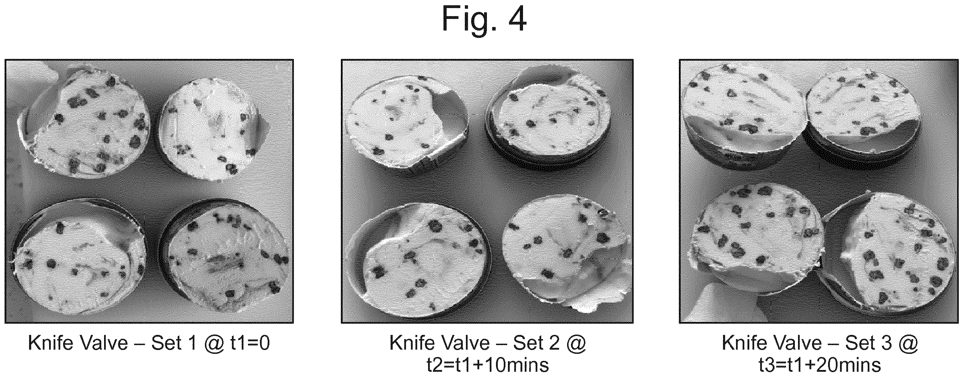

Samples of products made using the variegator and process of the invention are shown in Fig. 4. The chunks, the cookie dough pieces and the swirls are evenly distributed.

**Claims**

1. A variegator comprising:

    a. one or more conduits each suitable for feeding one or more base frozen confections to a first set of one or more openings into a chamber,

    b. one or more conduits suitable for feeding one or more non-solid fluid variegating materials through a second set of one or more openings into the chamber, the second set of one or more openings being at points below the base frozen confections opening(s), and

    c. a static mixer below the one or more variegating material openings, said static mixer comprising at least two baffles in series, the axis of the conduit through which the variegating material is fed through the one or more second openings into the chambers is disposed perpendicularly at the point of entry to the chamber(s) to the axis of at least one of the one or more conduits through which the base frozen confection is fed to the base frozen confection opening into the chambers at the point of entry to the chamber(s), wherein the first of the at least two static mixer baffles beginning at from 0 to 12 mm of the bottom of the variegating material opening or openings and the baffles of the static mixer are helical.

2. The variegator according to claim 1, comprising at least two conduits each suitable for feeding a base frozen confection to an opening in the chamber, the conduits comprising at least one section disposed along the same axis and opposed to each other and feeding into the opening.

3. The variegator according to claim 1, wherein the axes of all variegating material conduits at the points they enter the chambers to combine with the one or more base frozen confections are perpendicular to the axes of all frozen confection conduits, at the points they enter the chamber(s).

4. The variegator according to claim 1, comprising at least two conduits suitable for feeding the one or more fluid variegating materials through at least two second openings into the chamber at points below the base frozen confection opening(s), the static mixer comprising a first section on a first side of the static mixer for receiving the variegating material from the variegating material conduit and a second section on a second side of the static mixer for receiving the variegating material from the second conduit.

5. The variegator according to claim 1, wherein the first baffle begins at from 0.5 to 5 mm from the bottom of the variegating material opening.

6. A process for preparing a frozen confection comprising:

a. feeding one or more base frozen confections through one or more conduits of a variegator according to any one of claims 1 to 5, to a first opening or set of openings into a chamber,
b. feeding one or more fluid variegating materials through one or more conduits through a second opening or set of openings into the chamber at points below all base frozen confection opening or openings, and
c. feeding the combined frozen base confection and fluid variegating material into a static mixer below the variegating material opening or openings, said static mixer comprising at least two baffles in series, the axis of the conduit through which the variegating material is fed through the one or more second openings into the chambers is disposed perpendicularly at the point of entry to the chamber(s) to the axis of at least one of the one or more conduits through which the base frozen confection is fed to the base frozen confection opening into the chambers at the point of entry to the chamber(s),

wherein a first of the at least two static mixer baffles begins at from 0 to 12 mm of the bottom of all of the variegating material opening or openings, the baffles of the static mixer are helical, and particulate inclusions are included in the base frozen confection as it is fed into the variegator and wherein the particulate inclusions are chunks having an average length of from 0.5 to 30 mm and an average volume of from 0.125 to 27000 mm$^3$, and the one or more fluid variegating materials are non-solids.

7. The process according to claim 6, comprising feeding the one or more base frozen confections through at least two conduits, each to an opening in the chamber the conduits comprising at least one section disposed along the same axis and opposed to each other and feeding directly into the openings.

8. The process according to claim 6, wherein the axes of all variegating material conduits at the points they enter the chambers to combine with the one or more base frozen confections are perpendicular to the axes of all frozen confection conduits, at the points they enter the chamber(s).

9. The process according to claim 6, comprising feeding the one or more fluid variegating materials through the second set of openings into the chamber through at least two conduits to the static mixer wherein the static mixer comprises a first section on a first side of the static mixer for receiving the one or more variegating materials from one of the variegating material conduits and a second section on a second side of the static mixer for receiving the same or different one or more variegating material from the second of the variegating material conduits.

10. The process according to claim 6, wherein the first baffle begins at from 0.5 to 5 mm from the bottom of the variegating material opening.

**Patentansprüche**

1. Variegator, der Folgendes umfasst:

a. ein oder mehrere Rohre, wovon jedes geeignet ist, eine oder mehrere gefrorene Basiskonfektmassen zu einer ersten Gruppe aus einer oder mehreren Öffnungen in eine Kammer einzuspeisen,
b. ein oder mehrere Rohre, die geeignet sind, ein oder mehrere nicht feste, fluide Variegationsmaterialien durch eine zweite Gruppe aus einer oder mehreren Öffnungen in die Kammer einzuspeisen, wobei die zweite Gruppe aus einer oder mehreren Öffnungen an Punkten unter der Öffnung bzw. den Öffnungen für gefrorene Basiskonfektmassen angeordnet ist, und
c. einen statischen Mischer unter der einen oder den mehreren Öffnungen für Variegationsmaterial, wobei der statische Mischer wenigstens zwei Ablenkplatten hintereinander umfasst, wobei die Achse des Rohrs, durch das das Variegationsmaterial durch die eine oder mehrere zweite Öffnungen in die Kammern eingespeist wird, am Eintrittspunkt in die Kammer(n) senkrecht zur Achse des wenigstens einen des einen oder der mehreren Rohre angeordnet ist, durch die die gefrorene Basiskonfektmasse zur Öffnung für gefrorene Basiskonfektmasse in die Kammern am Eintrittspunkt in die Kammer(n) eingespeist wird, wobei die erste der wenigstens zwei Ablenkplatten des statischen Mischers 0 bis 12 mm über dem Boden der Öffnung oder der Öffnungen für Variegationsmaterial beginnt und wobei die Ablenkplatten des statischen Mischers schraubenlinienförmig sind.

**2.** Variegator nach Anspruch 1, der wenigstens zwei Rohre umfasst, die beide geeignet ist, eine gefrorene Basiskonfektmasse in eine Öffnung in der Kammer einzuspeisen, wobei die Rohre wenigstens ein Teilstück, das längs der gleichen Achse angeordnet ist und jeweils gegenüberliegt, umfassen, und in die Öffnung einspeisen.

**3.** Variegator nach Anspruch 1, wobei die Achsen aller Rohre für Variegationsmaterial an den Punkten, an denen sie in die Kammern eintreten, um mit dem einen oder mehreren gefrorenen Basiskonfektmassen zu kombinieren, an den Punkten, an denen sie in die Kammern eintreten, senkrecht zu den Achsen aller Rohre für gefrorene Konfektmasse angeordnet sind.

**4.** Variegator nach Anspruch 1, der wenigstens zwei Rohre umfasst, die zum Einspeisen des einen oder mehrerer fluider Variegationsmaterialien durch wenigstens zwei zweite Öffnungen in die Kammer an Punkten unterhalb der Öffnungen(en) für gefrorene Basiskonfektmasse geeignet sind, wobei der statische Mischer ein erstes Teilstück auf einer ersten Seite des statischen Mischers zum Aufnehmen des Variegationsmaterials aus dem Rohr für Variegationsmaterial und ein zweites Teilstück auf einer zweiten Seite des statischen Mischers zum Aufnehmen des Variegationsmaterials aus dem zweiten Rohr umfasst.

**5.** Variegator nach Anspruch 1, wobei die erste Ablenkplatte 0,5 bis 5 mm über dem Boden der Öffnung für Variegationsmaterial beginnt.

**6.** Verfahren zum Herstellen eines gefrorenen Konfekts, das die folgenden Schritte umfasst:

a. Einspeisen einer oder mehrerer gefrorener Basiskonfektmassen durch ein oder mehrere Rohre eines Variegators nach einem der Ansprüche 1 bis 5 zu einer ersten Öffnung oder einer Gruppe von Öffnungen in eine Kammer,

b. Einspeisen eines oder mehrerer fluider Variegationsmaterialien durch ein oder mehrere Rohre durch eine zweite Öffnung oder eine Gruppe von Öffnungen in die Kammer an Punkten unterhalb der Öffnung oder aller Öffnungen für gefrorene Basiskonfektmasse, und

c. Einspeisen der Kombination aus gefrorener Basiskonfektmasse und fluidem Variegationsmaterial in einen statischen Mischer unter der einen oder den mehreren Öffnungen für Variegationsmaterial, wobei der statische Mischer wenigstens zwei Ablenkplatten hintereinander umfasst, wobei die Achse des Rohrs, durch das das Variegationsmaterial durch die eine oder die mehreren zweite Öffnungen in die Kammern eingespeist wird, am Eintrittspunkt in die Kammer(n) senkrecht zur Achse wenigstens eines des einen oder der mehreren Rohre angeordnet ist, durch die die gefrorene Basiskonfektmasse der Öffnung für gefrorene Basiskonfektmasse in die Kammern am Eintrittspunkt in die Kammer(n) eingespeist wird,

wobei eine erste der wenigstens zwei Ablenkplatten des statischen Mischers auf einer Höhe von 0 bis 12 mm über dem Boden der Öffnung oder aller Öffnungen für Variegationsmaterial beginnt, wobei die Ablenkplatten des statischen Mischers schraubenlinienförmig sind, und wobei Partikeleinschlüsse in der gefrorenen Basiskonfektmasse enthalten sind, wenn diese in den Variegator eingespeist wird, und wobei die Partikeleinschließungen Brocken sind, die eine mittlere Länge von 0,5 bis 30 mm und ein mittleres Volumen von 0,125 bis 27000 mm$^3$ haben, und wobei das eine oder die mehreren fluiden Variegationsmaterialien keine Feststoffe sind.

**7.** Verfahren nach Anspruch 6, das das Einspeisen der einen oder mehrerer gefrorener Basiskonfektmassen durch wenigstens zwei Rohre jeweils zu einer Öffnung in die Kammer umfasst, wobei die Rohre wenigstens ein Teilstück, das längs der gleichen Achse angeordnet ist und jeweils gegenüberliegt, umfassen, und direkt in die Öffnungen einspeisen.

**8.** Verfahren nach Anspruch 6, wobei die Achsen aller Rohre für Variegationsmaterial an den Punkten, an denen sie in die Kammern eintreten, um mit der einen oder mehreren gefrorenen Basiskonfektmassen zu kombinieren, an den Punkten, an denen sie in die Kammer(n) eintreten, senkrecht zu den Achsen aller Rohre für gefrorene Konfektmasse verlaufen.

**9.** Verfahren nach Anspruch 6, das das Einspeisen des einen oder der mehreren fluiden Variegationsmaterialien durch die zweite Gruppe von Öffnungen in die Kammer durch wenigstens zwei Rohre in den statischen Mischer umfasst, wobei der statische Mischer ein erstes Teilstück auf einer ersten Seite des statischen Mischers zum Aufnehmen des einen oder mehrerer Variegationsmaterialien aus einem der Rohre für Variegationsmaterial und ein zweites Teilstück auf einer zweiten Seite des statischen Mischers zum Aufnehmen des gleichen oder eines anderen oder mehrerer Variegationsmaterialien aus dem zweiten der Rohre für Variegationsmaterial umfasst.

**10.** Verfahren nach Anspruch 6, wobei die erste Ablenkplatte auf einer Höhe von 0,5 bis 5 mm über dem Boden der Öffnung für Variegationsmaterial beginnt.

**Revendications**

**1.** Dispositif de panachage comprenant :

a. un ou plusieurs conduits, chacun étant approprié pour distribuer une ou plusieurs confiseries surgelées de base à un premier ensemble d'une ou plusieurs ouvertures dans une chambre,
b. un ou plusieurs conduits appropriés pour distribuer un ou plusieurs matériaux de panachage fluides non solides à travers un deuxième ensemble d'une ou plusieurs ouvertures dans la chambre, le deuxième ensemble d'une ou plusieurs ouvertures étant au niveau de points en dessous de l'ouverture/des ouvertures pour confiseries surgelées de base, et
c. un mélangeur statique en dessous des une ou plusieurs ouvertures pour matériaux de panachage, ledit mélangeur statique comprenant au moins deux déflecteurs en série, l'axe du conduit à travers lequel le matériau de panachage est distribué à travers les une ou plusieurs deuxièmes ouvertures dans les chambres est disposé perpendiculairement, au niveau du point d'entrée dans la/les chambre(s), à l'axe d'au moins l'un des un ou plusieurs conduits à travers lequel/lesquels la confiserie surgelée de base est distribuée à l'ouverture pour confiserie surgelée de base dans les chambres au niveau du point d'entrée de la/des chambre(s), dans lequel le premier des au moins deux déflecteurs de mélangeur statique commençant à une distance de 0 à 12 mm du fond de l'ouverture ou des ouvertures pour matériau de panachage et les déflecteurs du mélangeur statique sont hélicoïdaux.

**2.** Dispositif de panachage selon la revendication 1, comprenant au moins deux conduits, chacun étant approprié pour distribuer une confiserie surgelée de base à une ouverture dans la chambre, les conduits comprenant au moins une section disposée le long du même axe et étant opposés l'un à l'autre et assurant la distribution dans l'ouverture.

**3.** Dispositif de panachage selon la revendication 1, dans lequel les axes de tous les conduits de matériau de panachage au niveau des points où ils pénètrent dans les chambres pour se combiner avec les une ou plusieurs confiseries surgelées de base sont perpendiculaires aux axes de tous les conduits de confiseries surgelées, au niveau des points où ils pénètrent dans la/les chambre(s).

**4.** Dispositif de panachage selon la revendication 1, comprenant au moins deux conduits appropriés pour distribuer les un ou plusieurs matériaux de panachage fluides à travers au moins deux deuxièmes ouvertures dans la chambre au niveau de points en dessous de l'ouverture/des ouvertures pour confiseries surgelées de base, le mélangeur statique comprenant une première section sur un premier côté du mélangeur statique pour recevoir le matériau de panachage provenant du conduit de matériau de panachage et une deuxième section sur un deuxième côté du mélangeur statique pour recevoir le matériau de panachage provenant du deuxième conduit.

**5.** Dispositif de panachage selon la revendication 1, dans lequel le premier déflecteur commence à une distance de 0,5 à 5 mm du fond de l'ouverture pour matériau de panachage.

**6.** Processus de préparation d'une confiserie surgelée comprenant :

a. la distribution d'une ou plusieurs confiseries surgelées de base à travers un ou plusieurs conduits d'un dispositif de panachage selon l'une quelconque des revendications 1 à 5, à une première ouverture ou un premier ensemble d'ouvertures dans une chambre,
b. la distribution d'un ou plusieurs matériaux de panachage fluides à travers un ou plusieurs conduits à travers une deuxième ouverture ou un deuxième ensemble d'ouvertures dans la chambre au niveau de points en dessous de toutes de l'ouverture ou des ouvertures pour confiseries surgelées de base, et
c. la distribution de la confection de base surgelée et du matériau de panachage fluide combinés dans un mélangeur statique en dessous de l'ouverture ou des ouvertures pour matériau de panachage, ledit mélangeur statique comprenant au moins deux déflecteurs en série, l'axe du conduit à travers lequel le matériau de panachage est distribué à travers les une ou plusieurs deuxièmes ouvertures dans les chambres est disposé perpendiculairement au niveau du point d'entrée dans la chambre/les chambre(s) à l'axe d'au moins l'un des un ou plusieurs conduits à travers lesquels la confiserie surgelée de base est distribuée à l'ouverture pour confiserie surgelée de base dans les chambres au niveau du point d'entrée dans la/les chambre(s),

dans lequel un premier des au moins deux déflecteurs de mélangeur statique commence à une distance de 0 à 12 mm du fond de toutes de l'ouverture ou des ouvertures pour matériau de panachage, les déflecteurs du mélangeur statique sont hélicoïdaux, et des inclusions particulaires sont incluses dans la confiserie surgelée de base lorsqu'elle est distribuée dans le dispositif de panachage et dans lequel les inclusions particulaires sont des morceaux ayant une longueur moyenne de 0,5 à 30 mm et un volume moyen de 0,125 à 27 000 mm$^3$, et les un ou plusieurs matériaux de panachage fluides sont des non-solides.

7. Processus selon la revendication 6, comprenant la distribution des une ou plusieurs confiseries surgelées de base à travers au moins deux conduits, chacune vers une ouverture dans la chambre, les conduits comprenant au moins une section disposée le long du même axe et étant opposés l'un à l'autre et distribuant directement dans les ouvertures.

8. Processus selon la revendication 6, dans lequel les axes de tous les conduits de matériau de panachage au niveau des points où ils pénètrent dans les chambres pour se combiner avec les une ou plusieurs confiseries surgelées de base sont perpendiculaires aux axes de tous les conduits de confiseries surgelées, au niveau des points où ils pénètrent dans la/les chambre(s).

9. Processus selon la revendication 6, comprenant la distribution des un ou plusieurs matériaux de panachage fluides à travers le deuxième ensemble d'ouvertures dans la chambre à travers au moins deux conduits au mélangeur statique dans lequel le mélangeur statique comprend une première section sur un premier côté du mélangeur statique pour recevoir les un ou plusieurs matériaux de panachage de l'un des conduits de matériau de panachage et une deuxième section sur un deuxième côté du mélangeur statique pour recevoir le matériau identique ou différent d'un ou plusieurs matériaux de panachage du deuxième des conduits de matériau de panachage.

10. Procédé selon la revendication 6, dans lequel le premier déflecteur commence à une distance de 0,5 à 5 mm du fond de l'ouverture pour matériau de panachage.

# Fig. 1

# Fig. 2

# Fig. 3

Fig. 4

Knife Valve – Set 1 @ t1=0

Knife Valve – Set 2 @ t2=t1+10mins

Knife Valve – Set 3 @ t3=t1+20mins

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 687293
- US 3408960 A
- US 2774314 A
- US 20030068409 A, Binley
- US 2669946 A
- GB 1386955 A
- CA 570098, Moser
- US 2979996 A, Moser
- US 3014437 A, Dutchess
- GB 897820 A
- US 3477393 A, Bell
- CA 883029, Bell
- US 5209942 A

**Non-patent literature cited in the description**

- Cellulose, Microcrystalline (cellulose gel). Fourth Supplement to the Food Chemicals Codex. National Academy of Sciences-National research Council